# EUROPÄISCHE PATENTSCHRIFT

(11) **EP 1 776 616 B1**
(45) Veröffentlichungstag und Bekanntmachung des Hinweises auf die Patenterteilung: **08.09.2010**
(21) Anmeldenummer: 05776030.8
(22) Anmeldetag: 18.07.2005
(51) Int. Cl.: G05B 9/02, G05B 17/02

(54) **VERFAHREN ZUR DETEKTION VON STÖRQUELLEN ODER VON FEHLERHAFTEN MESSSENSOREN DURCH GUTFALL-MODELLIERUNG UND TEILWEISES AUSBLENDEN VON GLEICHUNGEN**
METHOD FOR DETECTING THE SOURCES OF FAULTS OR DEFECTIVE MEASURING SENSORS BY WORKING CASE MODELLING AND PARTIAL SUPPRESSION OF EQUATIONS
PROCEDE POUR DETECTER DES SOURCES DE PERTURBATIONS OU DES CAPTEURS DE MESURES DEFECTUEUX PAR MODELE DE CAS DE CONFORMITE ET SUPPRESSION PARTIELLE D'EQUATIONS

(30) Priorität: 10.08.2004 DE 102004038835
(43) Veröffentlichungstag der Anmeldung: 25.04.2007
(73) Patentinhaber: SIEMENS AKTIENGESELLSCHAFT, 80333 München (DE)
(72) Erfinder: HILLERMEIER, Claus, 83236 Übersee (DE); HOEVER, Georg, 52076 Aachen (DE); MAUSER, Hans, 81739 München (DE)
(86) Internationale Anmeldenummer: PCT/EP2005/053448
(87) Internationale Veröffentlichungsnummer: WO 2006/018360

(56) Entgegenhaltungen:
- US-A1- 2002 188 429
- US-A1- 2003 005 747
- US-B1- 6 594 620

## Beschreibung

In komplexen technischen Systemen ist es oft schwierig, bei Störfällen die genaue Fehlerursache zu finden. Beispielsweise hat in einem Rohrsystem ein Leck zur Folge, dass im weiteren Verlauf zu geringe Ströme gemessen werden und ein zu starker Druckabfall auftritt. Entsprechende Messsensoren schlagen dann Alarm, wobei häufig ein Meldeschwall entsteht. Darüber hinaus können die Auswirkungen des Fehlers vom Ort des Auftretens des Fehlers entfernt in Erscheinung treten. Ein weiteres Problem liegt darin, dass durch fehlerhafte Messungen Fehlalarme ausgelöst werden können.

Auf herkömmliche Weise gibt es - neben einer händischen Analyse des Meldeschwalls - Ansätze, mittels neuronaler Netze auf die Fehlerursache zu schließen.

Die US 2003/0005747 A1 offenbart ein Verfahren zur Erfassung und zur Korrektur von Sensorversagen in einem Öl- und Gaserzeugungssystem. Ein Sensorversagen in einem Öl- und Gaserzeugungssystem wird durch Überprüfen der Konsistenz der Messungen des in Frage stehenden Sensors unter Verwendung eines computerbasierten Prozessmodells mit den Messungen der anderen Sensoren in dem System überwacht und erfasst. Es wird ebenso ein Back-Up-Wert für einen fehlerhaften Sensor mit den Prozessmodellen durch Identifizierung des Wertes der am meisten mit den Messungen der anderen Sensoren in dem System konsistent ist, erzeugt.

Es ist damit Aufgabe der vorliegenden Erfindung auf einfache und kostengünstige Weise ein Verfahren und eine Vorrichtung zur Überwachung eines komplexen technischen Gesamtsystems bereit zu stelle

Die Aufgabe wird durch ein Verfahren gemäß dem Hauptanspruch 1 und eine Vorrichtung gemäß dem Nebenanspruch 9 gelöst.

Das betrachtete System wird komponentenorientiert modelliert. Dabei trägt jede Komponente gewisse zu erfüllende Gleichungen zum Modell - in Form einer Gesamtsystemmodellgleichung - bei, zum Beispiel ein Rohr eine Massenerhaltungsgleichung. Bei dieser komponentenorientierten Modellierung wird jede Komponente anhand einer von dieser zu erfüllenden Modellgleichung beschrieben und in eine Gesamtsystemmodellgleichung integriert. Durch mittels

Messsensoren erhaltene Messwerte werden die dazugehörigen Parameterwerte und damit dieses Modell an die Wirklichkeit angepasst. Entsprechende verfahren (Least-Squares-Anpassungen, Gauß-Newton-Iteration) sind bekannt. Im Gutfall gelingt diese Anpassung der Modellparameter an die Sensorwerte unter Einhaltung gewisser Genauigkeitsschwankungen.

In einem Störfall bzw. bei einer stark fehlerhaften Messung können die Parameter nicht mehr konsistent (das heißt im Rahmen der Mess- und Modellierungsgenauigkeiten) angepasst werden. Es wird festgestellt, dass eine Anpassung von Parametern an Sensorwerten nicht möglich und die Gesamtsystemmodellgleichung nicht lösbar ist. Blendet man allerdings die Modellgleichungen bzw. Modellgleichungsbestandteile, die zur fehlerhaften Komponente bzw. zu dem fehlerhaften Messsensor gehören, aus der Gesamtsystemmodellgleichung aus, gelingt wieder eine akzeptable Anpassung.

Damit kann auf einfache Weise eine Diagnose durchgeführt werden:
Gelingt eine akzeptable Anpassung der Messwerte an die Modellgleichungen, so kann von einem störungsfreien Betrieb ausgegangen werden. Falls nicht, führt man sukzessive eine Anpassung unter Ausblendung eines Messwertes durch. Gelingt eine akzeptable Anpassung bei Auslassung eines bestimmten Messwertes, so ist dies ein Indiz, dass der zum ausgelassenen Messwert zugehörige Sensor defekt ist.

Um die Fehlerquelle bei einem Störfall genauer zu lokalisieren, kann man wie folgt verfahren (parallel zur oder nach erfolgloser Suche nach einem defekten Messsensor wie oben): Aus dem Modellgleichungssystem werden die Gleichungen zu jeweils einer Komponente ausgeblendet. Der Fehler liegt dann in der Komponente, bei der das reduzierte Gleichungssystem akzeptabel lösbar ist. Man kann nun versuchen, die einzelnen Gleichungen der als defekt bewerteten Komponente nach und nach wieder hinzuzunehmen, um auf die Art des Fehlers zu schließen. Bei einem Leck beispielsweise wird eine Temperatur-Gleichung weiterhin erfüllt sein, während nur eine Massenbilanz-Gleichung zu einem nicht vernünftig lösbaren Gleichungssystem führt.

Der Vorteil des Verfahrens ist, dass nur eine Modellierung des Gutfalls des Systems benötigt wird. In dem Modell brauchen keine Fehlerszenarien enthalten sein. Die Auswertung geschieht automatisiert. Zur Auswertung ist kein Expertenwissen nötig.

Das Verfahren kann folgendermaßen effizient umgesetzt werden.

Durch den mathematischen Formalismus der Anpassung erhält man Sensitivitäten, welche Größen von welchen stark abhängen (Jakobimatrix). Diese kann man benutzen, um eine Reihenfolge der Ausblendungen von Messwerten oder Komponenten aufzustellen.

Zur Berechnung der Anpassungen für die einzelnen Ausblendungen muss nicht der gesamte mathematische Algorithmus von vorne angegangen werden. Man kann Berechnungsteilergebnisse wieder verwenden und Update-Strategien verwenden.

Es ist weiterhin besonders vorteilhaft, dass zur Berechnung von Anpassungen für einzelne Ausblendungen Teilergebnisse der Berechnung wieder verwendbar sind.

Gemäß einem vorteilhaften Ausführungsbeispiel wird die fehlerbehaftete Komponente und/oder der fehlerbehaftete Messsensor mittels entsprechender Anzeigemittel identifiziert bzw. angezeigt.

Weiterhin ist es besonders vorteilhaft, wenn die fehlerbehaftete Komponente bzw. der fehlerbehaftete Messsensor vom Gesamtsystem entfernt werden.

Weiterhin ist es besonders vorteilhaft, wenn die fehlerbehaftete Komponente bzw. der fehlerbehaftete Messsensor durch fehlerfreie Komponenten bzw. Messsensoren ersetzt werden.

Auf besonders einfache Weise kann die Überwachung bzw. Fehlerdiagnose mittels eines Personal-Computers PC durchgeführt werden.

Zur Ausführung des Verfahrens an einem PC ist es besonders vorteilhaft, wenn die Codes des Verfahrens auf einem Speichermedium wie beispielsweise eine CD-ROM gespeichert sind und damit für einen PC ausführbar sind.

Die Erfindung wird anhand der beigefügten Fig. Beschrieben.

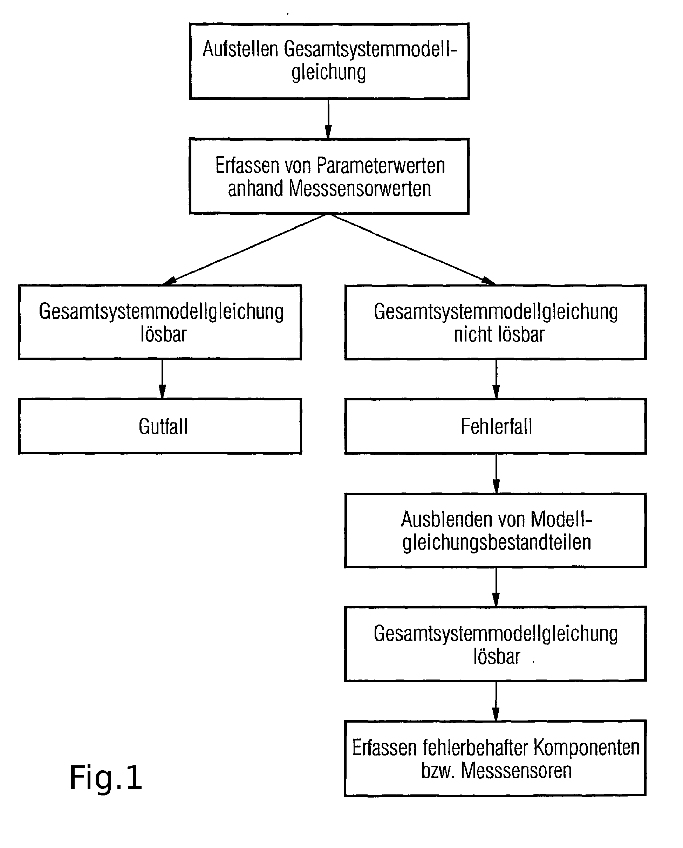

Fig. 1 zeigt die einzelnen Verfahrensschritte zur Fehlerdiagnose.

Zuerst erfolgt ein Aufstellen einer Gesamtsystemmodellgleichung, die das Gesamtsystem beschreibt. Mit jeder Modellgleichung einer Komponente werden bestimmte Parameter wie beispielsweise Temperatur, Massenstrom oder Dichte erfasst, die die Komponente hinreichend beschreiben. Anschließend werden mittels für die Komponenten bereit gestellte Messsensoren konkrete Werte der Parameter erfasst. Gehen alle erfassten Parameterwerte derart in die Gesamtsystemmodellgleichung ein, dass diese lösbar ist, so liegt ein fehlerfreier Betriebszustand des Gesamtsystems vor.

Ist dagegen die Gesamtsystemmodellgleichung nicht lösbar, so liegt für das Gesamtsystem ein Fehlerfall vor. Zur Erfassung der fehlerbehafteten Komponente(n) bzw. Messsensoren werden Komponenten oder Messsensoren zugeordnete Modellgleichungen oder Modellgleichungsbestandteile derart aus der Gesamtsystemmodellgleichung ausgeblendet, bis diese lösbar ist. Dazu können zur eindeutigen Bestimmung der fehlerbehafteten Komponente(n) oder Messsensoren Modellgleichungen oder Modellgleichungsbestandteile alternativ oder kumulativ ausgeblendet werden. Es ist auch möglich die gesamte Modellgleichung einer fehlerbehafteten Komponente auszublenden, um danach schrittweise einzelne Modellgleichungsbestandteile wieder in der Gesamtsystemmodellgleichung zu berücksichtigen. Sobald diese dann wieder nicht lösbar ist, ist die zuletzt berücksichtigte Teilkomponente bzw. der zuletzt berücksichtigte Messsensor fehlerbehaftet.

## Patentansprüche

1. Verfahren zur Überwachung eines komplexen technischen Gesamtsystems, mit den Schritten
Aufstellen einer Gesamtsystemmodellgleichung bestehend aus Parameter aufweisenden Modellgleichungen von das Gesamtsystem bildenden Einzelkomponenten,
Erfassen der Parameter der Einzelkomponenten mittels Sensorwerten von den Einzelkomponenten zugeordneten Sensoren, Feststellen, dass eine Anpassung der Parameter an die Sensorwerte möglich und die Gesamtsystemmodellgleichung lösbar ist, **dadurch gekennzeichnet, dass**
beim Feststellen, dass eine Anpassung mindestens eines Parameters an einen Sensorwert nicht möglich und die Gesamtsystemmodellgleichung nicht lösbar ist,
zur Fehlerdiagnose alternativ oder kumulativ ein Ausblenden von jeweiligen Komponenten und/oder Messsensoren zugeordneten Modellgleichungen oder Modellgleichungsbestandteilen aus der Gesamtsystemmodellgleichung erfolgt, bis wieder eine Anpassung der verbleibenden Parameter an die verbleibenden Sensorwerte möglich und die verbleibende Gesamtsystemmodellgleichung wieder lösbar ist, mit
Erfassen der jeweiligen Komponenten und/oder Messsensoren als fehlerbehaftet.

2. Verfahren nach Anspruch 1,
**dadurch gekennzeichnet, dass**
nach dem Ausblenden aller Modellgleichungsbestandteile einer als fehlerbehaftet erfassten Komponente,
zum Erfassen von fehlerbehafteten Messsensoren einzelne die dazugehörigen Parameter aufweisende Modellgleichungsbestandteile zur Gesamtsystemmodellgleichung wieder hinzugefügt werden.

3. Verfahren nach Anspruch 1 oder 2,
**dadurch gekennzeichnet, dass**
durch das Anpassen Sensitivitäten, insbesondere in Form einer Jakobimatrix, erzeugbar sind, mit denen Reihenfolgen des Ausblendens von Komponenten und/oder Messsensoren zugeordneten Modellgleichungen oder Modellgleichungsbestandteilen aus der Gesamtsystemmodellgleichung festlegbar sind.

4. Verfahren nach einem oder mehreren der Ansprüche 1 bis 3,
**dadurch gekennzeichnet, dass**
zur Berechnung von Anpassungen für einzelne Ausblendungen Berechnungsteilergebnisse verwendbar sind.

5. Verfahren nach einem oder mehreren der Ansprüche 1 bis 4,
**gekennzeichnet durch**
Anzeigen der fehlerbehafteten Komponente und/oder des fehlerbehafteten Messsensors.

6. Verfahren nach einem oder mehreren der Ansprüche 1 bis 5,
**gekennzeichnet durch**
Wegschalten der fehlerbehafteten Komponente vom Gesamtsystem.

7. Verfahren nach einem oder mehreren der Ansprüche 1 bis 6,
**gekennzeichnet durch**
Ersetzen der fehlerbehafteten Komponente **durch** eine fehlerfreie Komponente.

## Claims

1. Method for monitoring a complex technical system in its entirety, with the steps
establishment of an overall system model equation consisting of model equations of individual components forming the overall system, said model equations having parameters, acquisition of the parameters of the individual components using sensor values from sensors assigned to said individual components,
determination that an adjustment of the parameters to the sensor values is possible and the overall system model equation can be solved, **characterized by**
by determination that an adjustment of at least one parameter to a sensor value is not possible and the overall system model equation can not be solved,
for the purpose of fault diagnosis, model equations or model equation parts assigned to respective components and/or measuring sensors are alternatively or cumulatively suppressed from the overall system model equation until an adjustment of the remaining parameters to the remaining sensor values is possible once more and the remaining overall system model equation can once again be solved, with
detection of the respective components and/or measuring sensors as defective.

2. Method according to claim 1,
**characterised in that**
after all model equation parts of a component detected as defective have been suppressed, individual model equation parts having the associated parameters are added to the overall system model equation once again for the purpose of detecting defective measuring sensors.

3. Method according to claim 1 or 2,
**characterised in that**
as a result of the adjustment sensitivities, in particular in the form of a Jakobi matrix, can be generated by means of which orders of the suppression of model equations or model equation parts assigned to components and/or measuring sensors from the overall system model equation can be specified.

4. Method according to one or more of claims 1 to 3,
**characterised in that**
partial results from the calculation can be used for calculating adjustments for individual suppressions.

5. Method according to one or more of claims 1 to 4,
**characterised by**
displaying of the defective component and/or the defective measuring sensor.

6. Method according to one or more of claims 1 to 5,
**characterised by**
removal of the defective component from the overall system.

7. Method according to one of more of claims 1 to 6,
**characterised by**
replacement of the defective component by a properly functioning component.

## Revendications

1. Procédé de surveillance d'un système global technique complexe, comprenant les étapes
- établir une équation d'un modèle du système global composée d'équations paramétriques de modèles de composants individuels formant le système global,
- identifier les paramètres des composants individuels au moyen de valeurs de capteurs fournies par des capteurs associés aux composants individuels,
- déterminer qu'une adaptation des paramètres aux valeurs de capteurs est possible et que l'équation du modèle du système global est résoluble,
**caractérisé en ce que**
en constatant qu'une adaptation d'au moins un paramètre à une valeur de capteur n'est pas possible et que l'équation du modèle du système global n'est pas résoluble,
on supprime dans l'équation du modèle du système global en vue du diagnostic de défauts, alternativement ou cumulativement, des équations de modèles ou des éléments d'équations de modèles associés à des composants et/ou capteurs de mesure correspondants jusqu'à ce qu'une adaptation des paramètres restants aux valeurs de capteurs restantes soit de nouveau possible et l'équation du modèle du système global restante de nouveau résoluble, et
on identifie les composants et/ou capteurs de mesure correspondants comme étant entachés de défauts.

2. Procédé selon la revendication 1,
**caractérisé en ce que**
après avoir supprimé tous les éléments d'équations de modèles d'un composant identifié comme étant entaché de défauts,
on ajoute de nouveau à l'équation du modèle du système global différents éléments d'équations de modèles présentant les paramètres associés, afin d'identifier des capteurs de mesure entachés de défauts.

3. Procédé selon la revendication 1 ou 2,
**caractérisé en ce que**
l'adaptation permet de créer des sensibilités, en particulier sous forme d'une matrice jacobienne, à l'aide desquelles on peut déterminer des séquences de suppression d'équations de modèles ou d'éléments d'équations de modèles associés à des composants et/ou capteurs de mesure.

4. Procédé selon une ou plusieurs des revendications 1 à 3,
**caractérisé en ce que**
pour calculer des adaptations, on peut utiliser pour des suppressions individuelles des résultats de calcul partiels.

5. Procédé selon une ou plusieurs des revendications 1 à 4,
**caractérisé par**
indiquer le composant entaché de défauts et/ou le capteur de mesure entaché de défauts.

6. Procédé selon une ou plusieurs des revendications 1 à 5,
**caractérisé par**
désactiver le composant entaché de défauts dans le système global.

7. Procédé selon une ou plusieurs des revendications 1 à 6,
**caractérisé par**
remplacer le composant entaché de défauts par un composant exempt de défauts.
